# EUROPÄISCHE PATENTSCHRIFT

(11) **EP 1 560 692 B1**
(45) Veröffentlichungstag und Bekanntmachung des Hinweises auf die Patenterteilung: **30.08.2006**
(21) Anmeldenummer: 03779868.3
(22) Anmeldetag: 10.11.2003
(51) Int. Cl.: B29C 45/27, B29C 45/17, H01R 4/36, H05B 3/42

(54) **HEIZELEMENT ZUM AUFSETZEN AUF EINE ROHRLEITUNG**
HEATING ELEMENT ARRANGED ON A TUBULAR CONDUIT
ELEMENT CHAUFFANT A POSER SUR UNE CONDUITE TUBULAIRE

(30) Priorität: 12.11.2002 DE 10252389
(43) Veröffentlichungstag der Anmeldung: 10.08.2005
(73) Patentinhaber: Watlow GmbH, 76709 Kronau (DE)
(72) Erfinder: HOFFMANN, Michael, 76297 Stutensee (DE)
(74) Vertreter: Lasch, Hartmut
(86) Internationale Anmeldenummer: PCT/EP2003/012500
(87) Internationale Veröffentlichungsnummer: WO 2004/043672

(56) Entgegenhaltungen:
- EP-A- 0 607 499
- DE-U- 29 510 136
- US-A- 4 771 534

## Beschreibung

Die Erfindung betrifft ein Heizelement zum Aufsetzen auf eine Rohrleitung oder eine Düse, mit einem stromdurchflossenen Leiter, der über Anschlussleitungen an eine Stromquelle anschließbar ist, wobei die Anschlussleitungen jeweils ein endseitiges Kontaktstück aufweisen, das mit einer Kontaktfläche des Heizelementes in Anlage bringbar ist, und wobei eine Spannvorrichtung vorgesehen ist, mittels der das Kontaktstück gegen das Heizelement spannbar ist.

In vielen Anwendungsgebieten der industriellen Fertigung ist es erwünscht und notwendig, eine Rohrleitung oder eine Düse und somit das darin befindliche Medium auf einer erhöhten Temperatur zu halten. Im folgenden soll beispielhaft von einer Düse z.B. in der Kunststoffverarbeitung ausgegangen werden, jedoch treten gleichartige Probleme auch bei Rohrleitungen auf.

Zum Erwärmen der Düse und des Mediums wird außenseitig auf die Düse ein hülsenförmiges Heizelement aufgeschoben, das in seinem Inneren einen elektrischen Leiter aufweist, der bei Anlegen einer elektrischen Spannung bzw. beim Durchfluss eines elektrischen Stromes Wärme erzeugt. Bei dem Leiter kann es sich entweder um eine aus Widerstandsdraht gebildete Heizwendel handeln, alternativ ist jedoch auch ein sogenanntes Dünn- oder Dickschicht-Heizelement bekannt, bei dem die Wärme innerhalb der Dickschicht erzeugt wird, wenn sie stromdurchflossen ist. Im folgenden wird beispielhaft von einem Leiter in Form einer Heizwendel ausgegangen, jedoch ist die Erfindung darauf nicht beschränkt, sondern in gleicher Weise auch bei einem Dünn- bzw. Dickschicht-Heizelement anwendbar.

Die Heizwendel besitzt an ihren Enden jeweils ein fest angeschlossenes Anschlusskabel, das auf der Außenseite des Heizelementes hervorsteht. Über die Enden der Anschlusskabel lässt sich das Heizelement mit einer Verkabelung einer Spannungsquelle verbinden. Um ein in eine Maschine eingebautes Heizelement auszutauschen, müssen die Anschlusskabel des eingebauten Heizelementes von der weiterführenden Verkabelung gelöst und aus ihrer Kabelführung herausgenommen werden, woraufhin das Heizelement abgenommen werden kann. Ein neues Heizelement muss dann auf die Düse aufgesetzt werden und seine Anschlusskabel müssen in die Kabelführung der Maschine eingeführt und mit der weiterführenden Verkabelung verbunden werden. Dieses Vorgehen ist bereits beim Austausch nur eines einzelnen Heizelementes sehr aufwendig. Wenn beispielsweise wegen eines Produktwechsels gleichzeitig eine Vielzahl von Heizelementen ausgetauscht werden müssen, ist dafür eine sehr lange Umrüstzeit notwendig, in der die Maschine nicht betriebsbereit ist.

Um den Anschluss und den Austausch des Heizelementes zu erleichtern, ist in der US 4 486 650 eine lösbare Verbindung zwischen der Heizwendel, die in eine rohrförmige Muffe integriert ist, und den Anschlussleitungen vorgesehen. Auf der äußeren Mantelfläche der Muffe sind Stifte vorgesehen, die sich im Wesentlichen radial erstrecken und auf die jeweils ein hülsenförmiger Stecker der Anschlussleitungen aufgesteckt werden kann. Die elektrisch leitende Verbindung wird dabei zwischen der Außenoberfläche der Stifte und der Innenoberfläche der Stecker erreicht. Um zu verhindern, dass die Stecker von den Stiften herunterfallen, ist eine Spannvorrichtung in Form einer Überwurfmutter vorgesehen, mittels der die Stecker in Längsrichtung der Stifte gegen das Heizelement gespannt werden können. Obwohl durch den genannten Aufbau ein Heizelement geschaffen ist, das in einfacher Weise angeschlossen und ausgetauscht werden kann, ist damit der Nachteil verbunden, dass der elektrische Kontakt von der Passgenauigkeit zwischen den Stiften und den Steckern abhängig ist, die insbesondere bei Wärmeeinwirkung nachteilig beeinflusst sein kann. Insbesondere bei einem Dünn- bzw. Dickschicht-Heizelement ist es für eine gute Funktion des Heizelementes notwendig, dass zwischen der Kontaktfläche des Heizelementes und dem Kontaktstück bzw. Stecker der Anschlussleitungen eine großflächige Anlage in allen Betriebszuständen gewährleistet ist, was durch den Aufbau der US 4 486 650 nicht gegeben ist.

EP-A-0,607,499 zeit ein Heizelement nach dem oberbegrift des Anspruches 1.

Der Erfindung liegt die Aufgabe zugrunde, ein Heizelement der genannten Art zu schaffen, bei dem eine gute elektrische Anschlussverbindung zuverlässig sichergestellt ist.

Diese Aufgabe wird erfindungsgemäß bei einem Heizelement der genannten Art mit den kennzeichnenden Merkmalen des Anspruchs 1 gelöst. Dabei ist vorgesehen, dass die Anschlussleitungen jeweils ein endseitiges Kontaktstück aufweisen, das lose auf die Kontaktfläche des Heizelementes aufgelegt ist und alleine durch die Spannkraft der Spannvorrichtung gegen die Kontaktfläche gespannt ist. Die Spannkraft der Spannvorrichtung ist dabei im Wesentlichen normal zur Kontaktfläche gerichtet, d.h. die Spannvorrichtung spannt die Kontaktfläche und die Anlagefläche des Kontaktstückes direkt gegeneinander, wodurch eine großflächige Anlage in allen Betriebszuständen gewährleistet ist.

Erfindungsgemäß ist somit vorgesehen, die Anschlussleitungen lösbar direkt am Heizelement anzubringen, so dass bei einem Austausch des Heizelementes lediglich die Verbindung zwischen diesem und den Anschlussleitungen gelöst werden muss, ohne dass die Anschlussleitungen aus ihrer Kabelführung ausgebaut werden müssen. Um das Kontaktstück bei Betrieb des Heizelementes in vollflächigem Kontakt mit der Kontaktfläche zu halten, ist die Spannvorrichtung vorgesehen, die das Kontaktstück gegen die Kontaktfläche spannt. Durch Lösen der Spannvorrichtung kommt das Kontaktstück von der Kontaktfläche frei, wodurch das Heizelement abgenommen und ausgetauscht werden kann.

In Weiterbildung der Erfindung ist vorgesehen, dass die Kontaktfläche auf der radial äußeren Seite des Heizelementes angeordnet ist. Dies bringt den Vorteil mit sich, dass eine radial nach innen gerichtete Spannkraft das Kontaktstück sicher gegen die Kontaktfläche spannt.

Die von der Spannvorrichtung erzeugte Spannkraft, mittels der das Kontaktstück gegen die Kontaktfläche gedrückt wird, kann beispielsweise von einer Feder erzeugt werden. In einer bevorzugten Ausgestaltung der Erfindung ist vorgesehen, dass die Spannvorrichtung eine Spannschraube umfasst. Beim Festziehen der Spannschraube wird auf das Kontaktstück die notwendige Spannkraft ausgeübt, die es gegen die Kontaktfläche spannt.

Ein Heizelement der genannten Art ist üblicherweise von einem gestellfesten Reflektorrohr umgeben, das eine übermäßige Wärmeabstrahlung radial nach außen verhindern soll. Erfindungsgemäß kann dieses Reflektorrohr mit einer Gewindebohrung versehen sein. Die Spannschraube steht dann mit dem Gewinde der Gewindebohrung des Reflektorrohres in Eingriff und lässt sich durch Drehung relativ zu diesem in radialer Richtung verstellen.

Alternativ ist es auch möglich, das Heizelement oder das Reflektorrohr mit einer Spannklammer oder einem Spannbügel zu umgeben, wodurch die notwendige Spannkraft erzeugt wird, um das Kontaktstück in Anlage mit der Kontaktfläche zu halten.

Das Heizelement ist in der Regel mit einem isolierenden Mantel umgeben. In einer möglichen Ausgestaltung der Erfindung kann vorgesehen sein, dass die Kontaktfläche in einer Ausnehmung des Mantels des Heizelementes ausgebildet ist, d.h. nicht radial nach außen vom Heizelement vorsteht. Alternativ kann die Kontaktfläche an einem radial hervorstehenden Anschlussteil des Heizelementes ausgebildet sein, bei dem es sich beispielsweise um einen Anschlussstutzen oder -bolzen handeln kann.

Um eine großflächige Anlage zwischen der Kontaktfläche und dem Kontaktstück zu gewährleisten, sind die Kontaktfläche und vorzugsweise auch die Anlagefläche des Kontaktstückes glatt ausgebildet, wobei das Kontaktstück mit seiner zu der Kontaktfläche komplementären Anlagefläche großflächig an der Kontaktfläche anliegt. Der Begriff "komplementär" bedeutet dabei, das die Anlagefläche des Kontaktstücks das geometrisch negative Gegenstück zu der Kontaktfläche bildet. Wenn die Kontaktfläche im Wesentlichen eben ausgebildet ist, ist auch die Anlagefläche des Kontaktstücks im Wesentlichen eben ausgebildet. Bei einer konvexen Kontaktfläche besitzt die Anlagefläche eine konkave Form entsprechender Dimensionierung. Auf diese Weise ist sicher gestellt, dass zwischen der Kontaktfläche und der Anlagefläche des Kontaktstücks ein großflächiger elektrischer Kontakt gegeben ist.

Die Kontaktfläche und das Kontaktstück müssen außenseitig isoliert werden. Zu diesem Zweck kann in Weiterbildung der Erfindung vorgesehen sein, dass das Kontaktstück von einem Isolierkörper umgeben ist, wobei die Spannkraft vorzugsweise mittelbar über den Isolierkörper auf das Kontaktstück aufgebracht wird. Der Isolierkörper kann starr ausgebildet sein, in Weiterbildung der Erfindung ist jedoch vorgesehen, dass der Isolierkörper elastisch und insbesondere federelastisch ist, was beispielsweise erreicht wird, wenn der Isolierkörper aus einem Kunststoff-Schaummaterial besteht. Infolge der Spannkraft wird der Isolierkörper verformt und erzeugt eine Reaktions-Federkraft, die auf das Kontaktstück wirkt und dieses gleichmäßig beaufschlagt.

Damit das Heizelement zuverlässig mit elektrischer Energie versorgt wird, ist es notwendig, dass das Kontaktstück und die Kontaktfläche in vorbestimmter relativer Ausrichtung zueinander stehen. Um zu verhindern, dass diese vorbestimmte Relativposition während des Betriebes des Heizelementes verändert wird, ist in Weiterbildung der Erfindung vorgesehen, dass das Heizelement drehsicher auf der Rohrleitung oder der Düse festgelegt werden kann, so dass das Kontaktstück und die Kontaktfläche in vorbestimmter Ausrichtung gehalten sind.

Weitere Einzelheiten und Merkmale der Erfindung sind aus der folgenden Beschreibung von Ausführungsbeispielen unter Bezugnahme auf die Zeichnung ersichtlich. Es zeigen:
- Figur 1: einen vertikalen Schnitt durch ein montiertes Heizelement gemäß einer ersten Ausführungsform,
- Figur 2: einen vertikalen Schnitt durch ein montiertes Heizelement gemäß einer zweiten Ausführungsform,
- Figur 3: eine Abwandlung der Ausführungsform gemäß Fig. 2 und
- Figur 4: eine weitere Abwandlung der Ausführungsform gemäß Fig. 2.

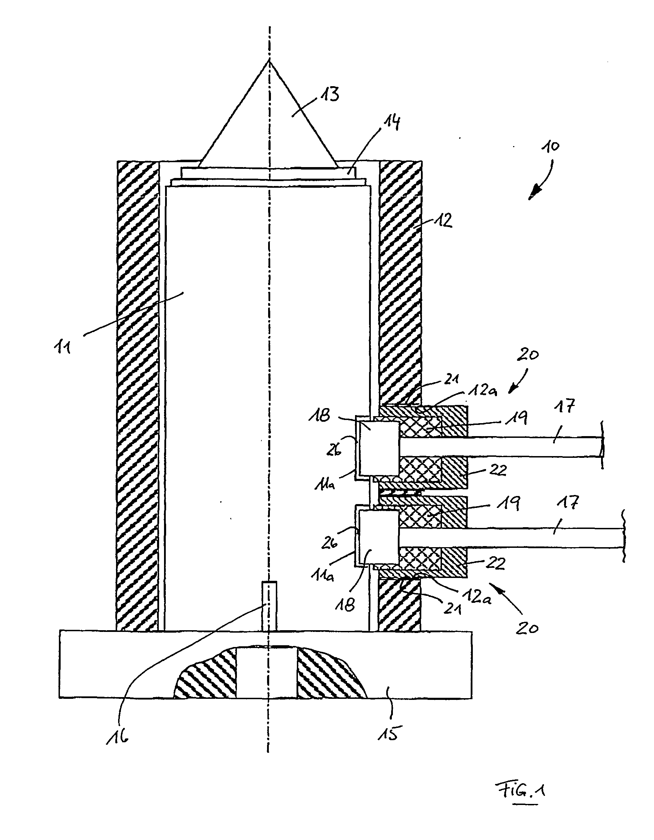

Fig. 1 zeigt eine Heizvorrichtung 10, mittels der ein in einer nur angedeuteten Düse 13 strömendes Medium erwärmt werden kann. Die Heizvorrichtung 10 umfasst eine gestellfeste Grundplatte 15, auf der ein Reflektorrohr 12 gehalten ist. Innerhalb des Reflektorrohres 12 verläuft mit radialem Abstand die Düse 13. Auf die Düse 13 ist axial ein hülsenförmiges Heizelement 11 aufgeschoben, das zwischen der Düse 13 und dem äußeren Reflektorrohr 12 angeordnet ist und über eine Drehsicherung 16, die an der Grundplatte 15 ausgebildet ist, drehsicher festgelegt ist. Des Weiteren ist das Heizelement 11 mittels einer Sicherung 14 in axialer Richtung auf der Düse 13 festgelegt.

In der Mantelfläche des Heizelementes 11 sind zwei axial beabstandete Ausnehmungen 11a ausgebildet, in denen jeweils eine Kontaktfläche 26 eines in oder an dem Heizelement 11 angeordneten, nicht dargestellten elektrischen Leiters ausgebildet ist.

In dem Reflektorrohr 12 ist in den Kontaktflächen 26 benachbarten bzw. gegenüberliegenden Bereichen jeweils eine Gewindebohrung 12a mit einem Innengewinde 21 ausgebildet. Eine elektrische Anschlussleitung 17 besitzt ein endseitiges Kontaktstück 18, das durch die Gewindebohrung 12a hindurchgesteckt und lose auf die Kontaktfläche 26 des Heizelementes 11 aufgelegt werden kann. Eine auf die Anschlussleitung 17 verschieblich aufgesetzte Spannschraube 22, die als Überwurfmutter ausgebildet ist, in ihrem Inneren mit einem elastischen Isolierkörper 19 gefüllt, der das Kontaktstück 18 zumindest teilweise umgibt und abschirmt. Die Spannschraube 22 besitzt ein Außengewinde, das mit dem Innengewinde 21 der Gewindebohrung 12a des Reflektorrohres 12 in Eingriff tritt. Beim Einschrauben der Spannschraube 22 in die Gewindebohrung des Reflektorrohres 12 wird die Spannschraube 22 relativ zum Heizelement 11 radial nach innen bewegt, wodurch das auf der Innenseite der Spannschraube 22 hervorstehende Kontaktstück 18 gegen die Kontaktfläche 26 des Heizelementes 11 gespannt wird. Die von der Spannschraube 22 erzeugte Spannkraft wirkt radial nach innen und damit im Wesentlichen normal zur Kontaktfläche 26 des Heizelementes 11. Infolge der Spannkraft ist somit das Kontaktstück 18 in großflächiger Anlage an der Kontaktfläche 26.

Um das Heizelement 11 auszuwechseln, werden die Spannschrauben 22 soweit aus der jeweiligen Gewindebohrung 12a des Reflektorrohres 12 herausgedreht, dass die Anschlussleitungen 17 mit ihrem jeweiligen Kontaktstück 18 außer Anlage mit der Kontaktfläche 26 des Heizelementes 11 kommen. Nach Lösen der axialen Sicherung 14 kann das Heizelement 11 in axialer Richtung von der Düse 13 abgenommen werden. Anschließend wird ein neues Heizelement auf die Düse aufgeschoben und durch Einschrauben der Spannschrauben 22 elektrisch angeschlossen, indem die Kontaktstücke 18 gegen die Kontaktflächen des neuen Heizelementes gespannt werden.

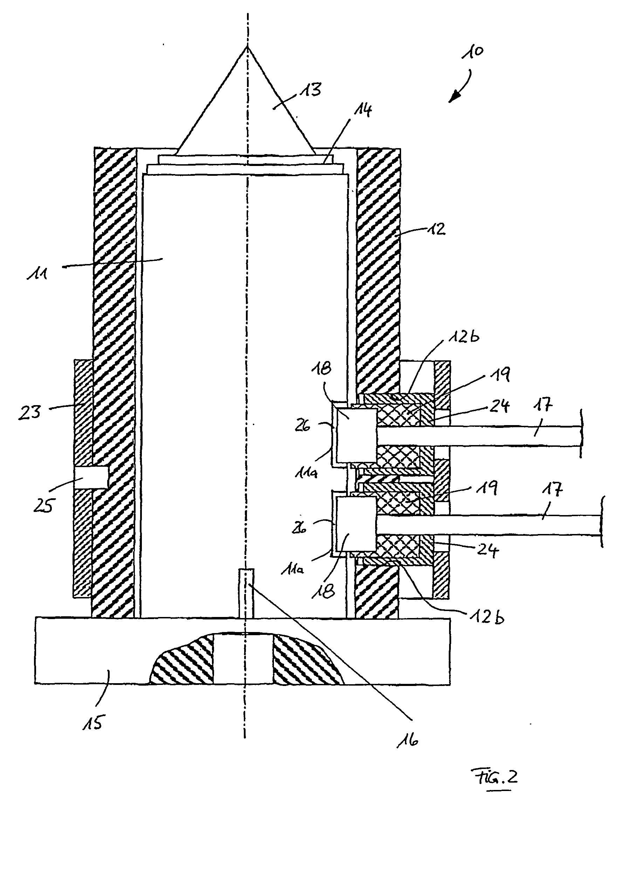

Während bei der Ausgestaltung gemäß Fig. 1 die Spannkraft, mittels der das Kontaktstück 18 gegen die Kontaktfläche 26 gespannt wird, durch eine mit dem Reflektorrohr 12 in Eingriff stehende Spannschraube 22 erzeugt wird, zeigt Fig. 2 eine alternative Ausgestaltung, bei der auf der Außenseite des Reflektorrohres 12 ein Federbügel 23 angeordnet ist, die über einen Stift 25 am Reflektorrohr 12 festgelegt ist. In einer Bohrung 12b des Reflektorrohres 12 sitzt ein becherförmiges Druckstück 24, das der vorgenannten Spannschraube mit Ausnahme des Gewindes entspricht und den Isolierkörper 19 aufnimmt, der seinerseits in genannter Weise das Kontaktstück 18 umgibt. Das Druckstück 24 sitzt radial verschieblich in der Bohrung 12b und wird mittels der Federbügels 23 mit einer radial nach innen gerichteten Spannkraft beaufschlagt, wodurch das Kontaktstück 18 gegen die Kontaktfläche 26 des Heizelementes 11 gespannt wird. Zum Auswechseln des Heizelementes 11 wird entweder der Federbügel 23 gelöst oder die Kontaktstücke 18 werden zusammen mit den Isolierkörpern 19 und den Druckstücken 24 entgegen der Federkraft des Federbügels 23 soweit radial nach außen gezogen, dass das Heizelement 11 freikommt und von der Düse 13 abgezogen werden kann.

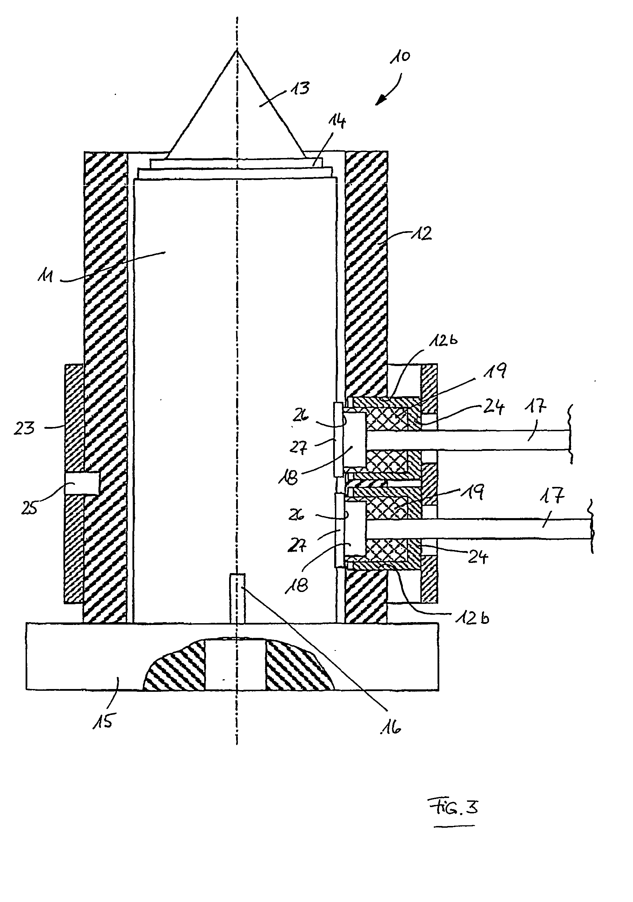

Während bei den beiden vorgenannten Ausführungsbeispielen die Kontaktfläche 26 jeweils in einer Ausnehmung 11a des Mantels des Heizelementes 11 ausgebildet ist, zeigt Fig. 3 eine Abwandlung, indem das Heizelement 11 zwei radial nach außen hervorstehende Anschlussteile 27 besitzt, die jeweils mit einem Kontaktstück 18 in Anlage gebracht werden können. Bei den Anschlussteilen 27 kann es sich um Anschlussstutzen oder Anschlussbolzen handeln. Bezüglich des weiteren Aufbaus entspricht die in Fig. 3 dargestellte Heizvorrichtung 10 der Heizvorrichtung gemäß Fig. 2.

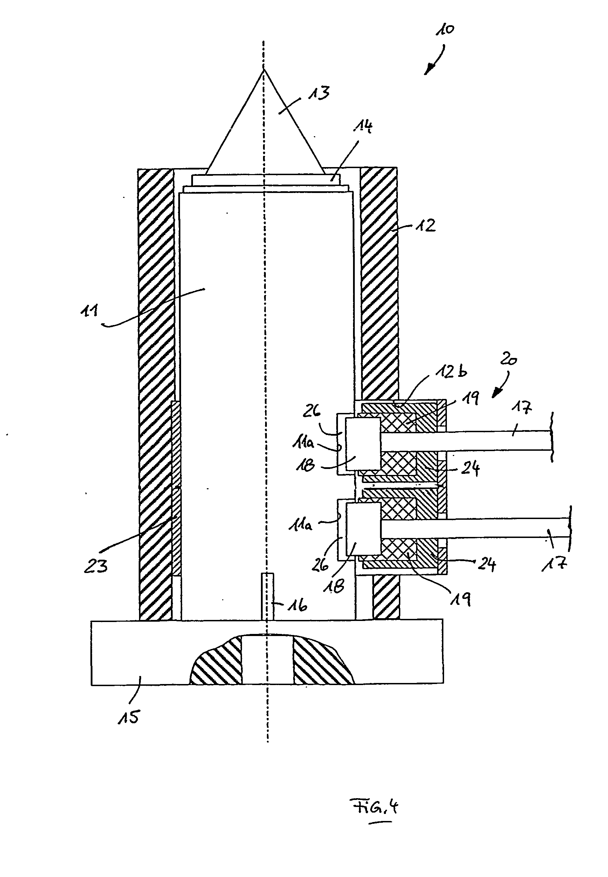

Fig. 4 zeigt eine Abwandlung der Spannvorrichtung gemäß Fig. 2. Die Spannvorrichtung gemäß Fig. 2 zeigt einen auf der Außenseite des Reflektorrohres 12 angeordneten Federbügel. Auch die Ausgestaltung gemäß Fig. 4 zeigt einen entsprechenden Federbügel, dieser umgreift jedoch direkt das Heizelement 11 und durchgreift das Reflektorrohr 12 an einer Aussparung 12b, so dass es in genannter Weise auf die radial außenliegende Fläche der Druckstücke 24 einwirken und diese radial nach innen beaufschlagen kann, wodurch die Spannkraft unter Zwischenschaltung der Isolierkörper 19 die Kontaktstücke 18 radial nach innen auf die radial äußeren Kontakflächen 26 des Heizelementes 11 spannt.

## Patentansprüche

1. Heizelement zum Aufsetzen auf eine Rohrleitung oder eine Düse (13), mit einem stromdurchflossenen Leiter, der über Anschlussleitungen (17) an eine Stromquelle anschließbar ist, wobei die Anschlussleitungen (17) jeweils ein endseitiges Kontaktstück (18) aufweisen, das mit einer Kontaktfläche (26) des Heizelementes (11) in Anlage bringbar ist, und wobei eine Spannvorrichtung (20) vorgesehen ist, mittels der das Kontaktstück (18) gegen das Heizelement (11) spannbar ist, **dadurch gekennzeichnet, dass** das Kontaktstück (18) lose auf der Kontaktfläche (26) aufliegt und dass die Spannkraft der Spannvorrichtung (20) im wesentlichen normal zur Kontaktfläche (26) wirkt und das Kontaktstück (18) gegen die Kontaktfläche (26) spannt.

2. Heizelement nach Anspruch 1, **dadurch gekennzeichnet, dass** die Kontaktfläche (26) auf der radial äußeren Seite des Heizelementes (11) angeordnet ist.

3. Heizelement nach Anspruch 1 oder 2, **dadurch gekennzeichnet, dass** die Kontaktfläche (26) in einer Ausnehmung (11a) eines Mantels des Heizelement (11) ausgebildet ist.

4. Heizelement nach Anspruch 1 oder 2, **dadurch gekennzeichnet, dass** die Kontaktfläche (26) an einem radial hervorstehenden Anschlussteil (27) des Heizelementes (11) ausgebildet ist.

5. Heizelement nach einem der Ansprüche 1 bis 4, **dadurch gekennzeichnet, dass** die Kontaktfläche (26) glatt ist und dass das Kontaktstück (18) mit einer komplementären Anlagefläche großflächig an der Kontaktfläche (26) anliegt.

6. Heizelement nach einem der Ansprüche 1 bis 5, **dadurch gekennzeichnet, dass** die Spannvorrichtung (20) eine Spannschraube (22) umfasst.

7. Heizelement nach Anspruch 6, **dadurch gekennzeichnet, dass** die Spannschraube (22) mit einem Gewinde (21) eines das Heizelement (11) umgebenden Reflektorrohres (12) in Eingriff steht.

8. Heizelement nach einem der Ansprüche 1 bis 5, **dadurch gekennzeichnet, dass** die Spannvorrichtung (20) einen das Heizelement (11) zumindest teilweise umgreifenden Spannbügel (23) umfasst.

9. Heizelement nach einem der Ansprüche 1 bis 8, **dadurch gekennzeichnet, dass** das Kontaktstück (18) von einem Isolierkörper (19) umgeben ist.

10. Heizelement nach Anspruch 9, **dadurch gekennzeichnet, dass** die Spannkraft über den Isolierkörper (19) auf das Kontaktstück (18) aufbringbar ist.

11. Heizelement nach Anspruch 9 oder 10, **dadurch gekennzeichnet, dass** der Isolierkörper (19) elastisch und insbesondere federelastisch ist.

12. Heizelement nach einem der Ansprüche 9 bis 11, **dadurch gekennzeichnet, dass** der Isolierkörper (19) aus einem Schaumstoffmaterial besteht.

13. Heizelement nach einem der Ansprüche 1 bis 12, **dadurch gekennzeichnet, dass** das Heizelement (11) auf der Rohrleitung oder der Düse (13) drehsicher festlegbar ist.

## Claims

1. Heating element for placing on a pipe or nozzle (13), with a current-carrying conductor connectable by means of connecting leads (17) to a power supply, the connecting leads (17) in each case having a terminal contact piece (18) which can be engaged with a contact surface (26) of the heating element (11), and where a clamping device (20) is provided by means of which the contact piece (18) can be clamped against the heating element (11), **characterized in that** the contact piece (18) rests loosely on the contact surface (26) and that the clamping force of the clamping device (20) acts in a substantially normal manner to the contact surface (26) and clamps the contact piece (18) against the contact surface (26).

2. Heating element according to claim 1, **characterized in that** the contact surface (26) is located on the radially outer side of the heating element (11).

3. Heating element according to claim 1 or 2, **characterized in that** the contact surface (26) is formed in a recess (11a) of a jacket of the heating element (11).

4. Heating element according to claim 1 or 2, **characterized in that** the contact surface (26) is formed on a radially projecting connection part (27) of the heating element (11).

5. Heating element according to one of the claims 1 to 4, **characterized in that** the contact surface (26) is smooth and that the contact piece (18) with a complimentary bearing surface engages in large-area manner on the contact surface (26).

6. Heating element according to one of the claims 1 to 5, **characterized in that** the clamping device (20) incorporates a locking screw (22).

7. Heating element according to claim 6, **characterized in that** the locking screw (22) is in engagement with a thread (21) of a reflector tube (12) surrounding the heating element (11).

8. Heating element according to one of the claims 1 to 5, **characterized in that** the locking device (20) incorporates a clamp (23) at least partly embracing the heating element (11).

9. Heating element according to one of the claims 1 to 8, **characterized in that** the contact piece (18) is surrounded by an insulator (19).

10. Heating element according to claim 9, **characterized in that** the clamping force can be applied to the contact piece (18) via the insulator (19).

11. Heating element according to claim 9 or 10, **characterized in that** the insulator (19) is elastic and in particular springy.

12. Heating element according to one of the claims 9 to 11, **characterized in that** insulator (19) is formed from a foam material.

13. Heating element according to one of the claims 1 to 12, **characterized in that** the heating element (11) can be secured in rotation-prevented manner on the pipe or nozzle (13).

## Revendications

1. Elément chauffant à monter sur une conduite tubulaire ou une buse (13), comprenant un conducteur traversé par un courant pouvant être raccordé par l'intermédiaire de lignes d'alimentation (17) à une source de courant, dans lequel les lignes d'alimentation (17) présentent chacune, côté extrémité, une pièce de contact (18) pouvant être mise en contact avec une surface de contact (26) de l'élément chauffant (11) et dans lequel on prévoit un dispositif de serrage (20) au moyen duquel la pièce de contact (18) peut être serrée contre l'élément chauffant (11), **caractérisé en ce que** la pièce de contact (18) repose librement sur la surface de contact (26) et **en ce que** la force de serrage du dispositif de serrage (20) agit sensiblement perpendiculairement à la surface de contact (26) et serre la pièce de contact (18) contre la surface de contact (26).

2. Elément chauffant selon la revendication 1, **caractérisé en ce que** la surface de contact (26) est disposée sur la face radialement extérieure de l'élément chauffant (11).

3. Elément chauffant selon la revendication 1 ou 2, **caractérisé en ce que** la surface de contact (26) est conformée dans un évidement (11a) d'une gaine de l'élément chauffant (11).

4. Elément chauffant selon la revendication 1 ou 2, **caractérisé en ce que** la surface de contact (26) est conformée sur un élément de raccordement (27) de l'élément chauffant (11) en saillie radiale.

5. Elément chauffant selon l'une quelconque des revendications 1 à 4, **caractérisé en ce que** la surface de contact (26) est lisse et **en ce que** la pièce de contact (18) vient en contact sur une grande étendue avec la surface de contact (26) par une surface de contact complémentaire.

6. Elément chauffant selon l'une quelconque des revendications 1 à 5, **caractérisé en ce que** le dispositif de serrage (20) comprend une vis de serrage (22).

7. Elément chauffant selon la revendication 6, **caractérisé en ce que** la vis de serrage (22) est engagée dans un filetage (21) d'un tube réflecteur (12) entourant l'élément chauffant (11).

8. Elément chauffant selon l'une quelconque des revendications 1 à 5, **caractérisé en ce que** le dispositif de serrage (20) comprend une bride de serrage (23) entourant au moins partiellement l'élément chauffant (11).

9. Elément chauffant selon l'une quelconque des revendications 1 à 8, **caractérisé en ce que** la pièce de contact (18) est entourée d'un corps isolant (19).

10. Elément chauffant selon la revendication 9, **caractérisé en ce que** la force de serrage peut être exercée sur la pièce de contact (18) par l'intermédiaire du corps isolant (19).

11. Elément chauffant selon la revendication 9 ou 10, **caractérisé en ce que** le corps isolant (19) est élastique, plus particulièrement par l'élasticité d'un ressort.

12. Elément chauffant selon l'une quelconque des revendications 9 à 11, **caractérisé en ce que** le corps isolant (19) est réalisé dans un matériau alvéolaire.

13. Elément chauffant selon l'une quelconque des revendications 1 à 12, **caractérisé en ce que** l'élément chauffant (11) peut être monté fixe en pivotement sur la conduite tubulaire ou la buse (13).
